# EUROPEAN PATENT APPLICATION

(11) **EP 2 574 472 A1**
(43) Date of publication of application: **03.04.2013**
(21) Application number: 12185419.4
(22) Date of filing: 21.09.2012
(51) Int. Cl.: B41J 2/175, B41J 2/19, B01D 17/04, B01D 17/00

(54) **Degassing apparatus on a liquid feed line, and an inkjet printing apparatus having the same**

(30) Priority: 27.09.2011 JP 2011210826
(71) Applicant: Dainippon Screen Mfg. Co., Ltd., Kyoto 602-8585 (JP)
(72) Inventor: Anno, Motoyuki, Kyoto, 602-8585 (JP)
(74) Representative: Goddar, Heinz J.

(57) **Abstract**

A degassing apparatus of a liquid feed line for removing gas present in a liquid before feeding the liquid. The apparatus includes a degassing module for receiving the liquid and removing the gas present in the liquid by being decompressed through a degassing port, a feed pipe for feeding the liquid to be degassed to the degassing module, decompression piping having one end thereof connected to the degassing port of the degassing module, a switch valve mounted on the decompression piping, a decompression tank connected to the other end of the decompression piping, a decompression pump for decompressing the decompression tank, a relative pressure gauge for measuring a pressure in the decompression tank, and a controller for carrying out decompression by operating the decompression pump at full capacity with the switch valve closed, and thereafter opening the switch valve while controlling the decompression pump by regarding a pressure of the relative pressure gauge as a maximum attainment relative pressure, and regarding as a target relative pressure a value obtained by adding a differ-between a predetermined target absolute pressure and a predetermined attainment pressure by absolute value reference of the decompression pump to the maximum attainment relative pressure.

## Description

### BACKGROUND OF THE INVENTION

### (1) Field of the Invention

This invention relates to a degassing apparatus on a liquid feed line for removing gas present in deionized water used in a semiconductor process or in ink used in printing, and an inkjet printing apparatus having the same.

### (2) Description of the Related Art

Conventionally, this type of apparatus includes a first membrane module and a second membrane module having different gas transmission rates and connected in series, and a vacuum pump for decompressing the membrane modules through degassing ports formed therein, respectively. See Japanese Unexamined Patent Publication H10-296005 (Figs. 1 and 2), for example.

The first membrane module and the second membrane module are decompressed by the vacuum pump through the degassing ports. After passing a liquid through the first membrane module, the liquid is passed through the second membrane module which has a lower gas transmission rate than the first membrane module, to degas the liquid efficiently. Pressure is measured by a pressure gauge provided on a gas-phase side of each module, and the decompression is controlled to bring the pressure to a target value.

However, the conventional example with such construction has the following problem.

While the conventional apparatus measures current pressure with pressure gauges, absolute manometers which can measure absolute pressure are extremely expensive. So, common relative pressure gauges are used to measure relative pressure. Therefore, the apparatus could be affected by weather conditions such as typhoons and geographical conditions such as plateaus at altitudes of 2000m and higher. When such factors cause variations lowering atmospheric pressure around the apparatus, the atmospheric pressure used as the reference assumed at the time of designing of the apparatus lowers, which substantially lowers the target pressure value below what it was at the time of designing. In other words, the conventional apparatus is affected by atmospheric pressure variations around the apparatus, and this gives rise to a problem of failing to provide decompression to a target absolute pressure accurately.

When a liquid, which has a peculiar saturation vapor pressure, is decompressed to a pressure lower than the saturation vapor pressure, a phenomenon will occur in which the liquid evaporates. When degassing printing ink, for example, an inconvenience will occur in which the solvent evaporates to deteriorate the ink. Therefore, simply being capable of decompression is not adequate for the purpose of degassing. It is important to decompress the liquid to be degassed by a pressure not lower than the saturation vapor pressure of the liquid.

The absolute pressure noted above is a pressure (= gauge pressure + atmospheric pressure) measured based on zero pressure (reference) in a perfect vacuum. The relative pressure noted above is a pressure measured based on zero atmospheric pressure (reference).

### SUMMARY OF THE INVENTION

This invention has been made having regard to the state of the art noted above, and its object is to provide a degassing apparatus on a liquid feed line, and an inkjet printing apparatus having the same, which can avoid influences of atmospheric pressure variations to realize decompression to an accurate target pressure in absolute pressure without using an absolute manometer, and can inhibit adverse influences of excessive decompression on a liquid to be degassed.

The above object is fulfilled, according to this invention, by a degassing apparatus on a liquid feed line for removing gas present in a liquid before feeding the liquid, the apparatus comprising a degassing module for receiving the liquid and removing the gas present in the liquid by being decompressed through a degassing port; a feed pipe for feeding the liquid to be degassed to the degassing module; decompression piping having one end thereof connected to the degassing port of the degassing module; a switch valve mounted on the decompression piping; a decompression tank connected to the other end of the decompression piping; a decompression pump for decompressing the decompression tank; a relative pressure gauge for measuring a pressure in the decompression tank; and a controller for carrying out decompression by operating the decompression pump at full capacity with the switch valve closed, and thereafter opening the switch valve while controlling the decompression pump by regarding a pressure of the relative pressure gauge as a maximum attainment relative pressure, and regarding as a target relative pressure a value obtained by adding a difference between a predetermined target absolute pressure and a predetermined attainment pressure by absolute value reference of the decompression pump to the maximum attainment relative pressure.

According to this invention, the controller, with the switch valve closed, operates the decompression pump at full capacity to decompress the decompression tank. The pressure in the decompression tank is reduced to the attainment pressure which is a specification of the decompression pump. The controller controls the decompression pump based on the pressure of the relative pressure gauge at this time serving as the maximum attainment relative pressure, and the value obtained by adding the difference between the target absolute pressure set beforehand and the attainment pressure by absolute value reference of the decompression pump to the maximum attainment relative pressure serving as the target relative pressure. Therefore, based on the attainment pressure by the decompression pump which is known from its specification, the decompression tank is decompressed with the switch valve opened, to carry out degasification by the degassing module. This can avoid the influence of atmospheric pressure variations around the apparatus, without using an absolute manometer. As a result, decompression can be carried out with an accurate target pressure in absolute pressure, and adverse influences of excessive decompression on the liquid can be inhibited.

In this invention, the controller may be arranged to open the switch valve only while the liquid is fed from the feed pipe to the degassing module.

If degassing were continued in a state of no liquid being fed from the feed pipe to the degassing module, the solvent could volatilize gradually, thereby deteriorating the liquid. Such an inconvenience can be prevented by opening the switch valve for degassing only while the liquid is fed to the degassing module.

In this invention, the degassing apparatus may further comprise a storage device for storing the attainment pressure by absolute value reference of the decompression pump; wherein the controller is arranged to refer to the attainment pressure stored in the storage device.

The attainment pressure in the storage device can be changed according to the specifications of the decompression pump. Thus, the invention provides the same advantages even when the decompression pump is replaced with a different decompression pump.

In another aspect of the invention, there is provided an inkjet printing apparatus for applying ink from nozzles of an inkjet head to form prints on printing paper, the apparatus comprising a degassing module for receiving the ink and removing the gas present in the ink by being decompressed through a degassing port; a feed pipe for feeding the ink to be degassed to the degassing module; nozzle piping for interconnecting the degassing module and the nozzles; decompression piping having one end thereof connected to the degassing port of the degassing module; a switch valve mounted on the decompression piping; a decompression tank connected to the other end of the decompression piping; a decompression pump for decompressing the decompression tank; a relative pressure gauge for measuring a pressure in the decompression tank; and a controller for carrying out decompression by operating the decompression pump at full capacity with the switch valve closed, thereafter opening the switch valve while controlling the decompression pump by regarding a pressure of the relative pressure gauge as a maximum attainment relative pressure, and regarding as a target relative pressure a value obtained by adding a difference between a predetermined target absolute pressure and a predetermined attainment pressure by absolute value reference of the decompression pump to the maximum attainment relative pressure, and feeding the ink from the nozzle piping to the nozzles of the inkjet head while degassing the ink by feeding the ink from the feed pipe to the degassing module.

According to this invention, the controller, with the switch valve closed, operates the decompression pump at full capacity to decompress the decompression tank. The pressure in the decompression tank is reduced to the attainment pressure which is a specification of the decompression pump. The controller controls the decompression pump based on the pressure of the relative pressure gauge at this time serving as the maximum attainment relative pressure, and the value obtained by adding the difference between the target absolute pressure set beforehand and the attainment pressure by absolute value reference of the decompression pump to the maximum attainment relative pressure serving as the target relative pressure. Therefore, based on the attainment pressure by the decompression pump which is known from its specification, the decompression tank is decompressed with the switch valve opened, to carry out degasification by the degassing module. This can avoid the influence of atmospheric pressure variations around the apparatus, without using an absolute manometer. As a result, decompression can be carried out with an accurate target pressure in absolute pressure, and adverse influences of excessive decompression on the ink can be inhibited, to perform excellent printing in the ink fed from the nozzle piping to the nozzles.

### BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.
Fig. 1 is a schematic view showing an entire inkjet printing system according to this invention;
Fig. 2 is a block diagram showing a degassing device on a liquid feed line; and
Fig. 3 is a flow chart showing operation of the degassing device on the liquid feed line.

### DESCRIPTION OF THE PREFERRED EMBODIMENTS

One embodiment of this invention will be described hereinafter with reference to the drawings.

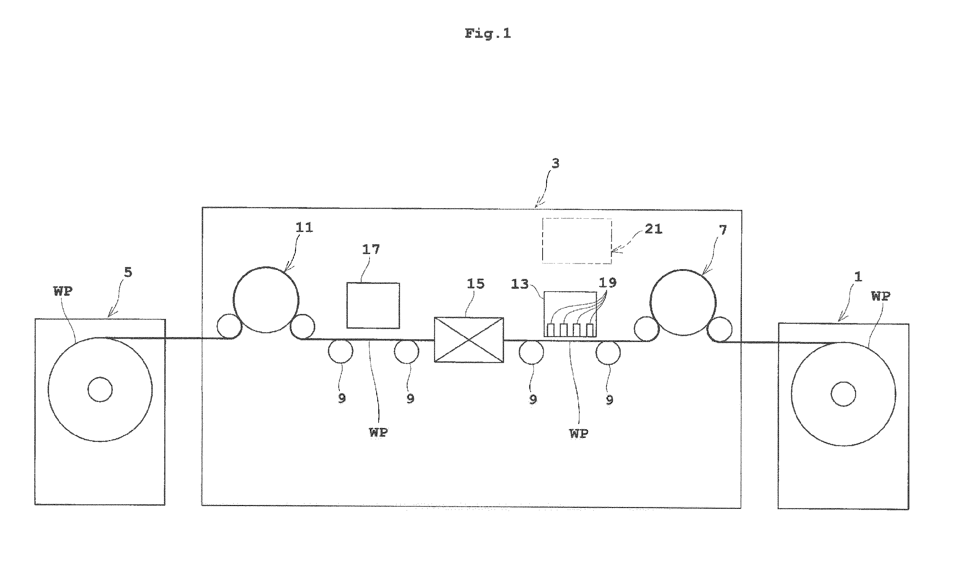

Fig. 1 is a schematic view showing an entire inkjet printing system according to this invention.

The inkjet printing system according to this invention includes a paper feeder 1, an inkjet printing apparatus 3, and a paper discharger 5. The paper feeder 1 feeds web paper WP stored in a roll form as a printing medium, for example. The inkjet printing apparatus 3 performs printing on the web paper WP fed thereto. The paper discharger 5 winds up printed web paper WP in a roll form.

The paper feeder 1 holds the web paper WP in the rolled form to be rotatable about a horizontal axis, and unwinds the web paper WP to feed it to the inkjet printing apparatus 3. The paper discharger 5 winds up the web paper WP printed by the inkjet printing apparatus 3 about a horizontal axis. Regarding the side from which the web paper WP is fed as upstream and the side to which the web paper WP is discharged as downstream, the paper feeder 1 is disposed upstream of the inkjet printing apparatus 3 while the paper discharger 5 is disposed downstream of the inkjet printing apparatus 3.

The inkjet printing apparatus 3 includes a drive roller 7 in an upstream position thereof for taking in the web paper WP from the paper feeder 1. The web paper WP unwound from the paper feeder 1 by the drive roller 7 is transported downstream toward the paper discharger 5 along a plurality of transport rollers 9. A drive roller 11 is disposed between the most downstream transport roller 9 and the paper discharger 5. This drive roller 11 feeds the web paper WP advancing on the transport rollers 9 toward the paper discharger 5.

Between the drive roller 7 and drive roller 11, the inkjet printing apparatus 3 has a printing unit 13, a drying unit 15, and an inspecting unit 17 arranged in order from upstream to downstream. The drying unit 15 dries portions printed by the printing unit 13. The inspecting unit 17 inspects the printed portions for any stains or omissions.

The printing unit 13 has inkjet heads 19 for discharging ink droplets. Generally, a plurality of printing units 13 are arranged along the transport direction of the web paper WP. For example, four printing units 13 are provided separately for black (K), cyan (C), magenta (M), and yellow (Y). However, in order to facilitate understanding of the invention, the following description will be made on an assumption that only one printing unit 13 is provided. The printing unit 13 has a plurality of inkjet heads 19 arranged also in a horizontal direction (width direction) perpendicular to the transport direction of the web paper WP. The printing unit 13 has enough inkjet heads 19 arranged also in the width direction of the web paper WP to perform printing without moving over a printing area in the width direction of the web paper WP. That is, the inkjet printing apparatus 3 in this embodiment performs printing on the web paper WP being fed thereto, with the inkjet heads 19 not moving for primary scanning, but remaining stationary, in the horizontal direction perpendicular to the transport direction of the web paper WP. This mode is called one-pass mode.

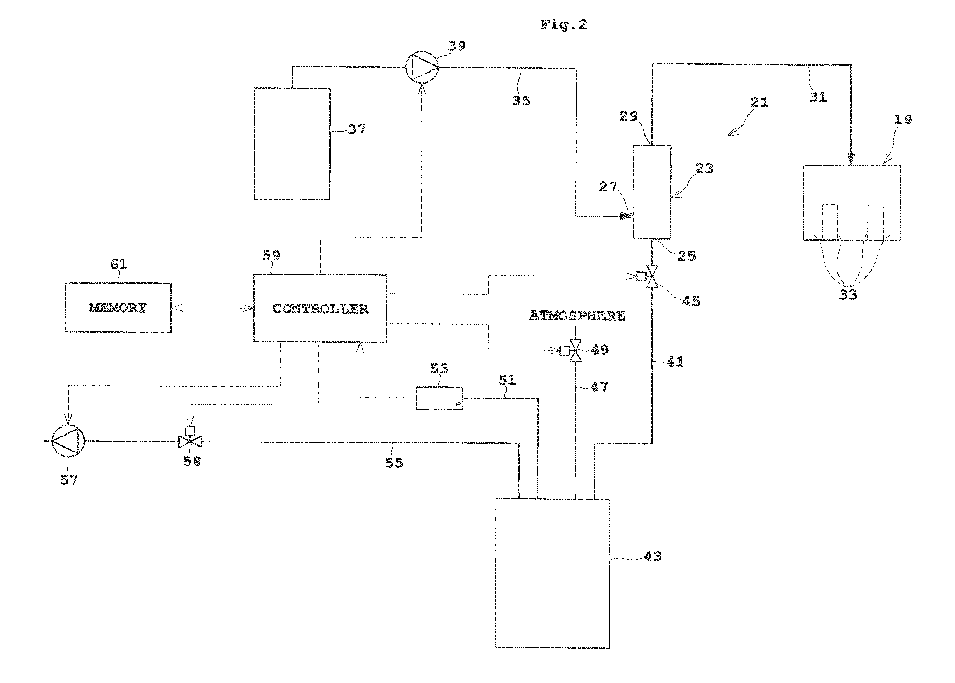

A degassing device 21 on a liquid feed line in the printing unit 13 will be described with reference to Fig. 2. Fig. 2 is a block diagram showing the degassing device 21 on the liquid feed line.

A degassing module 23 has a function for removing gas from a liquid. Specifically, the degassing module 23 has, for example, a bundle of hollow fibers of a synthetic resin mounted in a housing, a degassing port 25 for decompressing the ambient of the hollow fiber bundle, and an injection port 27 for injecting the liquid from which gas is to be removed. The degassing module 23 includes a feed port 29 communicating with the injection port 27 for feeding the degassed liquid. In this embodiment, the liquid is a printing ink.

The degassing module 23 has the feed port 29 connected for communication with the inkjet heads 19 through nozzle piping 31. The nozzle piping 31 is connected to a plurality of nozzles 33 of each inkjet head 19 for feeding the degassed ink.

One end of a feed pipe 35 is connected for communication with the injection port 27 of the degassing module 23. The other end of the feed pipe 35 is connected to an ink tank 37. A liquid pump 39 is mounted on the feed pipe 35. This liquid pump 39 force-feeds the ink stored in the ink tank 37 to the injection port 27 of the degassing module 23.

One end of decompression piping 41 is connected for communication with the degassing port 25 of the degassing module 23. The other end of the decompression piping 41 is connected to a decompression tank 43. A decompression valve 45 is mounted on the decompression piping 41. One end of an atmospheric communicating pipe 47 is connected for communication with the decompression tank 43. The other end of the atmospheric communicating pipe 47 is open to the atmosphere. A breather valve 49 is mounted on the atmospheric communicating pipe 47.

The above decompression valve 45 corresponds to the "switch valve" in this invention.

Pressure survey piping 51 extends from the decompression tank 43 for measuring a relative internal pressure of the latter. A relative pressure gauge 53 is mounted on the pressure survey piping 51. The relative pressure gauge 53 successively measures relative pressures (gauge pressures) inside the decompression tank 43, and outputs relative pressure values.

The decompression tank 43 has one end of an exhaust pipe 55 connected thereto. A decompression pump 57 is connected to the other end of the exhaust pipe 55. The exhaust pipe 55 has a control valve 58 mounted thereon.

The liquid pump 39, decompression valve 45, breather valve 49, decompression pump 57 and control valve 58 are controlled by a controller 59. The controller 59 is formed of a CPU, for example. The controller 59 has memory 61 connected thereto. The memory 61 which corresponds to the "storage device" in this invention has, stored beforehand therein, an attainment pressure according to specifications of the decompression pump 57. This attainment pressure represents a maximum degree of decompression according to the specifications which can be attained when the decompression pump 57 is operated at full capacity. That is, the attainment pressure represents a limit value beyond which no further decompression is achieved by operating the decompression pump 57. The attainment pressure is an absolute pressure and it is 2.5kPa (absolute pressure) in this embodiment, for example. The memory 61 has, stored therein, also a target absolute pressure as a target of decompression of the decompression tank 43. The target absolute pressure here is 6kPa, for example.

Controls by the controller 59 will be described briefly. With the liquid pump 39 at rest, the controller 59 first closes the decompression valve 45 and the breather valve 49, and opens the control valve 58. Then, the decompression pump 57 is operated. This operation is carried out at full capacity of the decompression pump 57. Consequently, the internal pressure of the decompression tank 43 becomes the attainment pressure (e.g. 2.5kPa (absolute pressure)) of the decompression pump 57. The controller 59 reads a pressure at this time from the relative pressure gauge 53. Assume that this pressure is -98.5kPa in relative pressure, for example. The controller 59 regards this pressure as a maximum attainment relative pressure, and obtains a difference between the target absolute pressure and the attainment pressure (absolute pressure) in the memory 61. The target absolute pressure is higher than the attainment pressure (absolute value). The controller 59 adds this difference to the maximum attainment relative pressure (which corresponds to the attainment pressure with an absolute value), and sets this as a target relative pressure. The controller 59 controls the decompression pump 57 so that the pressure measured by the relative pressure gauge 53 become the target relative pressure. At the point of time when the pressure of the pressure gauge 53 becomes the target relative pressure, or at the point of time when the target relative pressure is reached and stabilized, the controller 59 opens the decompression valve 45 and operates the liquid pump 39, thereby to discharge degassed ink from the nozzles 33.

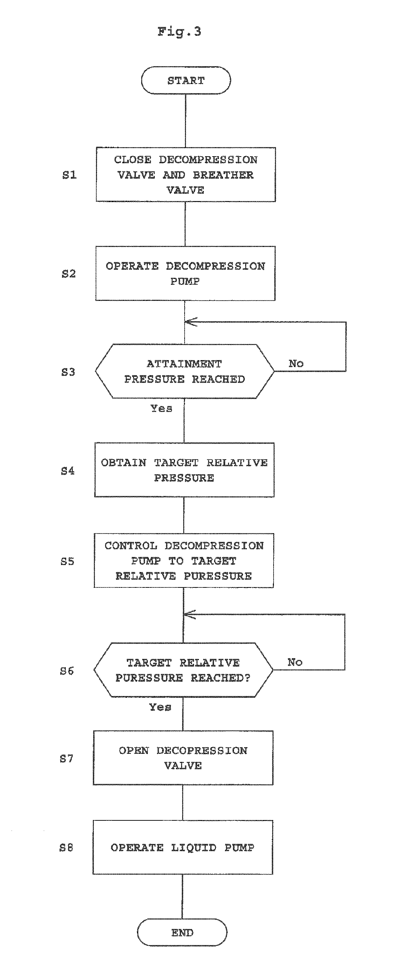

Next, operation of the above degassing device 21 on the liquid feed line in the inkjet printing system will be described with reference to Fig. 3. Fig. 3 is a flow chart showing operation of the degassing device 21 on the liquid feed line.

### Step S1

The controller 59 closes the decompression valve 45 and breather valve 49.

### Steps S2 and S3

The controller 59 operates the decompression pump 57 at full capacity. Consequently, the interior of the decompression tank 43 is decompressed to the attainment pressure (2.5kPa) of the decompression pump 57. The time when the pressure in the decompression tank 43 reaches the attainment pressure is variable with the volume of the decompression pump 43, the capacity of the decompression pump 43, and so on. Therefore, before factory shipment, an absolute manometer may temporarily be attached to the decompression tank 43, and in this state a time taken to reach the attainment pressure may be measured. Then, an allowance time may be added to the reaching time, and the result may be stored beforehand in the memory 61 as an attainment pressure reaching time. The controller 59 may proceed to the next operation when the attainment pressure reaching time elapses after starting operation of the decompression pump 43.

When using a pump having a high vacuum attainment level like the decompression pump 43 in this embodiment, if decompression were started without closing the decompression valve 45, the ink present in the degassing module 23 would be degassed. Since this would destabilize the pressure in the decompression tank 43, it is necessary to close the decompression valve 45.

### Steps S4-S6

The controller 59 obtains a target relative pressure. The target relative pressure is obtained by adding a difference between the target absolute pressure and the attainment pressure by absolute value reference of the decompression pump 57 stored beforehand in the memory 61, to the maximum attainment relative pressure which is a pressure of the relative pressure gauge 53 after step S3. Using this value as the target relative pressure, the controller 59 controls the decompression pump 57 so that the pressure of the relative pressure gauge 53 become the target relative pressure. The operation proceeds to the next step when the pressure of the relative pressure gauge 53 becomes equal to the target relative pressure.

### Steps S7 and S8

The controller 59 opens the decompression valve 45, and subsequently operates the liquid pump 39. Consequently, the ink is force-fed by the liquid pump 39 from the ink tank 37 to the degassing module 23, and after being degassed, is discharged from the nozzles 33.

Examples of the pressure control of the decompression tank 43 are shown here. As noted hereinbefore, the attainment pressure of the decompression pump 57 is assumed to be 2.5kPa (absolute pressure), and the target absolute pressure 6kPa.

Normal time: Atmospheric pressure is assumed to be 101kPa (absolute pressure).

The pressure of the relative pressure gauge 53 at the time of maximum decompression by the decompression pump 57 (maximum attainment relative pressure) is -98.5kPa. Therefore, the target relative pressure is -95kPa, which is obtained by adding a difference (3.5kPa) between the target absolute pressure (6kPa) and the attainment pressure (2.5kPa) to the maximum attainment relative pressure (-98.5kPa). That is, the target relative pressure is determined by converting the maximum attainment relative pressure into the attainment pressure (absolute value).

Time of typhoon: Atmospheric pressure is assumed to be 95kPa (absolute pressure).

Since the maximum attainment relative pressure is -92.5kPa, the target relative pressure is -92.5kPa + 3.5kPa = 89kPa.

Plateau at an altitude of 2000m: Atmospheric pressure is assumed to be 79.5kPa (absolute pressure).

Since the maximum attainment relative pressure is -77kPa, the target relative pressure is -77kPa + 3.5kPa = 73.5kPa.

According to the apparatus in this embodiment, the controller 59, with the decompression valve 45 and breather valve 49 closed, operates the decompression pump 57 at full capacity to decompress the decompression tank 43. The pressure in the decompression tank 43 is reduced to the attainment pressure which is a specification of the decompression pump 57. The controller controls the decompression pump 57 based on the pressure of the relative pressure gauge 53 at this time serving as the maximum attainment relative pressure, and the value obtained by adding the difference between the target absolute pressure set beforehand and the attainment pressure by absolute value reference of the decompression pump 57 to the maximum attainment relative pressure serving as the target relative pressure. Therefore, based on the attainment pressure by the decompression pump 57 which is known from its specification, the decompression tank 43 is decompressed with the decompression valve 45 opened, to carry out degasification by the degassing module 23. This can avoid the influence of atmospheric pressure variations around the apparatus, without using an absolute manometer. As a result, decompression can be carried out with an accurate target pressure in absolute pressure, and adverse influences of excessive decompression on the ink can be inhibited, to perform excellent printing in the ink fed from the nozzle piping 31 to the nozzles 33.

Generally, if degassing were continued in a state of no ink being fed from the feed pipe 35 to the degassing module 23, the solvent could volatilize gradually from ink stagnating in the degassing module 23, thereby deteriorating the ink. However, the apparatus in this embodiment can prevent such an inconvenience by opening the decompression valve 45 for degassing only while the ink is fed to the degassing module 23.

The apparatus in this embodiment stores the attainment pressure by absolute value reference of the decompression pump 57 beforehand in the memory 61. Therefore, the attainment pressure can be changed according to the specifications of the decompression pump 47. The apparatus provides the same advantages even when the decompression pump 57, because of failure to operate properly, for example, is replaced with a decompression pump 57 of different specifications.

This invention is not limited to the foregoing embodiment, but may be modified as follows:
(1) The foregoing embodiment has been described taking for example the degassing device 21 on the liquid feed line in the inkjet printing apparatus 3 of the inkjet printing system. However, this invention is not limited to the degassing device 21 on the liquid feed line in the inkjet printing apparatus 3. The invention is applicable also to a liquid degassing device such as of a deionized water feeder, for example.
(2) The foregoing embodiment carries out degassing only when ink is fed to the degassing module 23. Instead, degassing may be carried out constantly. This can simplify the control.
(3) The foregoing embodiment provides the memory 61 for storing the attainment pressure of the decompression pump 57, which is rewritable. However, when the decompression pump 57 is replaceable only with a pump of the same specifications, there is no need to rewrite the attainment pressure to the memory 61.

This invention may be embodied in other specific forms without departing from the spirit or essential attributes thereof and, accordingly, reference should be made to the appended claims, rather than to the foregoing specification, as indicating the scope of the invention.

## Claims

1. A degassing apparatus on a liquid feed line for removing gas present in a liquid before feeding the liquid, the apparatus comprising:
a degassing module for receiving the liquid and removing the gas present in the liquid by being decompressed through a degassing port;
a feed pipe for feeding the liquid to be degassed to the degassing module;
decompression piping having one end thereof connected to the degassing port of the degassing module;
a switch valve mounted on the decompression piping;
a decompression tank connected to the other end of the decompression piping;
a decompression pump for decompressing the decompression tank;
a relative pressure gauge for measuring a pressure in the decompression tank; and
a controller for carrying out decompression by operating the decompression pump at full capacity with the switch valve closed, and thereafter opening the switch valve while controlling the decompression pump by regarding a pressure of the relative pressure gauge as a maximum attainment relative pressure, and regarding as a target relative pressure a value obtained by adding a difference between a predetermined target absolute pressure and a predetermined attainment pressure by absolute value reference of the decompression pump to the maximum attainment relative pressure.

2. The degassing apparatus according to claim 1, wherein the controller is arranged to open the switch valve only while the liquid is fed from the feed pipe to the degassing module.

3. The degassing apparatus according to claim 1, further comprising:
a storage device for storing the attainment pressure by absolute value reference of the decompression pump;
wherein the controller is arranged to refer to the attainment pressure stored in the storage device.

4. The degassing apparatus according to claim 2, further comprising:
a storage device for storing the attainment pressure by absolute value reference of the decompression pump;
wherein the controller is arranged to refer to the attainment pressure stored in the storage device.

5. The degassing apparatus according to claim 1, wherein the controller is arranged to open the switch valve after the pressure of the relative pressure gauge reaches the target relative pressure.

6. The degassing apparatus according to claim 2, wherein the controller is arranged to open the switch valve after the pressure of the relative pressure gauge reaches the target relative pressure.

7. The degassing apparatus according to claim 3, wherein the controller is arranged to open the switch valve after the pressure of the relative pressure gauge reaches the target relative pressure.

8. The degassing apparatus according to claim 4, wherein the controller is arranged to open the switch valve after the pressure of the relative pressure gauge reaches the target relative pressure.

9. An inkjet printing apparatus for applying ink from nozzles of an inkjet head to form prints on printing paper, the apparatus comprising:
a degassing module for receiving the ink and removing the gas present in the ink by being decompressed through a degassing port;
a feed pipe for feeding the ink to be degassed to the degassing module;
nozzle piping for interconnecting the degassing module and the nozzles;
decompression piping having one end thereof connected to the degassing port of the degassing module;
a switch valve mounted on the decompression piping;
a decompression tank connected to the other end of the decompression piping;
a decompression pump for decompressing the decompression tank;
a relative pressure gauge for measuring a pressure in the decompression tank; and
a controller for carrying out decompression by operating the decompression pump at full capacity with the switch valve closed, thereafter opening the switch valve while controlling the decompression pump by regarding a pressure of the relative pressure gauge as a maximum attainment relative pressure, and regarding as a target relative pressure a value obtained by adding a difference between a predetermined target absolute pressure and a predetermined attainment pressure by absolute value reference of the decompression pump to the maximum attainment relative pressure, and feeding the ink from the nozzle piping to the nozzles of the inkjet head while degassing the ink by feeding the ink from the feed pipe to the degassing module.

10. The inkjet printing apparatus according to claim 9, wherein the controller is arranged to open the switch valve only while the ink is fed from the feed pipe to the degassing module.

11. The inkjet printing apparatus according to claim 9, further comprising:
a storage device for storing the attainment pressure by absolute value reference of the decompression pump;
wherein the controller is arranged to refer to the attainment pressure stored in the storage device.

12. The inkjet printing apparatus according to claim 10, further comprising:
a storage device for storing the attainment pressure by absolute value reference of the decompression pump;
wherein the controller is arranged to refer to the attainment pressure stored in the storage device.

13. The inkjet printing apparatus according to claim 9, wherein the controller is arranged to open the switch valve after the pressure of the relative pressure gauge reaches the target relative pressure.

14. The inkjet printing apparatus according to claim 10, wherein the controller is arranged to open the switch valve after the pressure of the relative pressure gauge reaches the target relative pressure.

15. The inkjet printing apparatus according to claim 11, wherein the controller is arranged to open the switch valve after the pressure of the relative pressure gauge reaches the target relative pressure.
